# EUROPÄISCHE PATENTSCHRIFT

(11) **EP 4 505 088 B1**
(45) Veröffentlichungstag und Bekanntmachung des Hinweises auf die Patenterteilung: **11.03.2026**
(21) Anmeldenummer: 23717483.4
(22) Anmeldetag: 04.04.2023
(51) Int. Cl.: F16C 11/06, E05F 15/622

(54) **ANSCHLUSSGELENKANORDNUNG**
CONNECTION JOINT ARRANGEMENT
ARRANGEMENT D'ARTICULATION DE CONNEXION

(30) Priorität: 05.04.2022 DE 102022108116
(43) Veröffentlichungstag der Anmeldung: 12.02.2025
(73) Patentinhaber: Brose Fahrzeugteile SE & Co. Kommanditgesellschaft, Bamberg, 96052 Bamberg (DE)
(72) Erfinder: GÖLLER, Christian, 96052 Bamberg (DE); HÄNJES, Ariane, 30827 Garbsen (DE); SCHNEIDERBANGER, Michael, 96179 Rattelsdorf (DE); EINNATZ, Klaus, 96050 Bamberg (DE); EISENTRAUT, Jakob, 96231 Bad Staffelstein (DE)
(74) Vertreter: Gottschald Patentanwälte Partnerschaft mbB
(86) Internationale Anmeldenummer: PCT/EP2023/058788
(87) Internationale Veröffentlichungsnummer: WO 2023/194356

(56) Entgegenhaltungen:
- EP-A1- 0 413 623
- EP-A2- 0 733 815
- WO-A1-2020/220114
- DE-B1- 1 525 177

## Beschreibung

Die vorliegende Erfindung betrifft eine Anschlussgelenkanordnung zum Anschluss einer längenverstellbaren Antriebsanordnung an ein Kraftfahrzeug gemäß dem Oberbegriff von Anspruch 1, Verfahren zur Montage einer Anschlussgelenkanordnung gemäß den Ansprüchen 9 bis 11, eine Antriebsanordnung zur Verstellung eines Verschlusselements eines Kraftfahrzeugs gemäß dem Anspruch 12, eine Verschlusselementanordnung gemäß dem Anspruch 13 sowie ein Verfahren zur Demontage einer Anschlussgelenkanordnung gemäß dem Oberbegriff von Anspruch 14.

Der motorischen Verstellung von Verschlusselementen kommt bei der Komfortsteigerung von Kraftfahrzeugen eine besondere Bedeutung zu. Der Begriff "Verschlusselement" ist vorliegend weit zu verstehen. Er umfasst beispielsweise eine Heckklappe, einen Heckdeckel, eine Motorhaube, eine Seitentür, eine Laderaumklappe, eine Fensterscheibe, ein Hubdach oder dergleichen eines Kraftfahrzeugs. Das Verschlusselement kann schwenkbar an dem Kraftfahrzeug angelenkt oder nach Art einer Schiebetür mit dem Kraftfahrzeug gekoppelt sein. Im Folgenden steht der Anwendungsbereich der Verstellung einer Heckklappe eines Kraftfahrzeugs im Vordergrund.

Üblicherweise verfügen Antriebsanordnungen zum Verstellen eines Verschlusselements über eine Antriebseinheit mit einem Antriebsmotor und einem Übersetzungsgetriebe, auch als Zwischengetriebe bezeichnet, sowie ein der Antriebseinheit nachgeschaltetes Vorschubgetriebe, insbesondere ein Spindel-Spindelmuttergetriebe, zur Erzeugung linearer Antriebsbewegungen zum Öffnen und Schließen des Verschlusselements. Die linearen Antriebsbewegungen werden über eine Anschlussgelenkanordnung auf das Verschlusselement des Kraftfahrzeugs und über eine weitere Anschlussgelenkanordnung auf das Kraftfahrzeug im Übrigen übertragen.

Die bekannte Anschlussgelenkanordnung (EP 0 733 815 A2), von der die Erfindung ausgeht, ist zum Anschluss einer längenverstellbaren Antriebsanordnung an ein Kraftfahrzeug vorgesehen. Die Anschlussgelenkanordnung weist einen Kugelbolzen und eine Kugelpfanneneinheit auf, wobei die Kugelpfanneneinheit eine Kugelpfanne mit einem radial innenseitigen Hohlraum zur Aufnahme eines Kugelkopfes des Kugelbolzens aufweist. Im montierten Zustand bilden der Kugelbolzen und die Kugelpfanneneinheit zusammen ein Kugelgelenk. Zur Arretierung des Kugelkopfes in der Kugelpfanne ist eine Sicherungsspange vorgesehen, die einen Bügelabschnitt und zwei damit endseitig verbundene Sperrzungen aufweist. Die vom Bügelabschnitt winkelig abgehenden Sperrzungen erstrecken sich durch eine jeweils zugeordnete Durchführung, die in der Kugelpfanne ausgebildet ist, in den Hohlraum. Im montierten Zustand der Anschlussgelenkanordnung, das heißt, wenn sich der Kugelkopf innerhalb der Kugelpfanne in dem Hohlraum befindet, hintergreifen die beiden Sperrzungen den Kugelkopf an seiner dem Bolzenschaft zugewandten Seite und sichern den Kugelbolzen dadurch gegen ein Herausziehen aus dem Hohlraum entgegen der Einführrichtung des Kugelkopfes. Der Bügelabschnitt ist im montierten Zustand der Anschlussgelenkanordnung mit der Kugelpfanneneinheit verrastet und somit verliersicher gehalten. Im Rahmen einer Demontage, das heißt zum Lösen des Kugelkopfes aus der Kugelpfanne, kann die Verrastung zwischen dem Bügelabschnitt und der Kugelpfanneneinheit gelöst werden und im Anschluss die Sicherungsspange derart relativ zur Kugelpfanneneinheit verschoben werden, dass die Sperrzungen aus den Durchführungen geführt werden, wodurch der Kugelkopf freigeben wird. Anschlussgeelenkanordnungen mit Sicherungsspangen sind ebenfalls aus WO 2020/220114 A1 oder EP 0 413 623 A1 bekannt.

Es ist dabei eine Herausforderung, dass sich das Lösen der Verrastung des Bügelabschnitts mit der Kugelpfanneneinheit im Rahmen der Demontage besonders aufwendig gestaltet und in der Regel nur mit einem speziellen Werkzeug durchführbar ist. Gleichzeitig muss die Sicherungsspange vollständig von der Kugelpfanneneinheit separiert werden, um sicherstellen zu können, dass der Kugelkopf freigegeben ist und aus der Kugelpfanne entnommen werden kann. Im Rahmen der Demontage erhält der Benutzer somit eine hohe Anzahl von Einzelteilen, die im Rahmen der Montage wieder miteinander verbunden werden müssen.

Der Erfindung liegt das Problem zugrunde, die bekannten Anschlussgelenkanordnung derart auszugestalten und weiterzubilden, dass die Demontage der Anschlussgelenkanordnung vereinfacht wird.

Das obige Problem wird durch die Merkmale des kennzeichnenden Teils von Anspruch 1 gelöst.

Wesentlich ist die grundsätzliche Überlegung, die Sicherungsspange derart mit der Kugelpfanneneinheit zu verbinden, dass die Sicherungsspange auch in ihrer Demontageposition, in der sie den Kugelkopf freigibt, verliersicher an der Kugelpfanneneinheit gehalten ist. Die Demontage der Anschlussgelenkanordnung führt dann also nicht dazu, dass die Sicherungsspange von der Kugelpfanneneinheit gelöst wird, wodurch die Komplexität bei der Demontage verringert wird. Die Sicherungsspange und die Kugelpfanneneinheit bilden dann auch im Rahmen der Demontage der Anschlussgelenkanordnung eine funktionelle Einheit.

Anspruch 2 definiert einen bevorzugten Eingriff zwischen den Sperrzungen und jeweils einem abgeschrägten Führungsabschnitt.

Nach der Ausgestaltung gemäß Anspruch 3 weist die Sicherungsspange in ihrer Demontageposition einen größeren Abstand entlang der geometrischen Mittellinie zur Einführungsöffnung auf als in ihrer Sicherungsposition, wodurch die Position der Sicherungsspange auf einfache Weise erkannt werden kann.

Gemäß Anspruch 4 ist die Sicherungsspange in ihrer Sicherungsposition gehalten, wodurch eine Geräuschentwicklung zwischen der Sicherungsspange und der Kugelpfanneneinheit in der Sicherungsposition der Sicherungsspange verringert oder vollständig verhindert wird.

Nach der weiteren Ausgestaltung gemäß Anspruch 5 ist die Sicherungsspange durch eine auf den Bügelabschnitt einwirkende Kraft in ihre Demontageposition bringbar, wodurch eine besonders einfache Überführung der Sicherungsspange in ihre Demontageposition sichergestellt ist. Anspruch 5 definiert auch eine besonders bevorzugte Bewegung, durch die die Sicherungsspange in ihre Demontageposition bringbar ist.

Nach der bevorzugten Ausgestaltung gemäß Anspruch 6 sind die Sperrzungen in der Demontageposition derart weit voneinander beabstandet, dass der Kugelkopf in besonders einfacher Weise zwischen den Sperrzungen durchgeführt werden kann.

Anspruch 7 definiert eine besonders bevorzugte Ausgestaltung der Anschlagsfläche, durch die eine vorteilhafte Bewegung der Sicherungsspange beim Übergang von ihrer Sicherungsposition in ihre Demontageposition in Einführrichtung und quer dazu ermöglicht wird.

Gemäß Anspruch 8 ist die Sicherungsspange in ihrem montierten Zustand an der Kugelpfanneneinheit verliersicher gehalten, wodurch sowohl die Montage als auch die Demontage der Anschlussgelenkeinheit vereinfacht wird.

Gemäß Anspruch 9 ist die Sicherungsspange im Rahmen einer Vormontage in die Kugelpfanne derart einschiebbar, dass die Sicherungsspange verliersicher in der Kugelpfanneneinheit gehalten ist, wodurch die Montage der Anschlussgelenkanordnung in besonders einfacher Weise durchführbar ist.

Nach der weiter bevorzugten Ausgestaltung gemäß Anspruch 10 ist die Verwendung eines Vormontagewerkzeugs im Rahmen der Vormontage vorgesehen, wobei die Sicherungsspange derart in die Kugelpfanneneinheit einschiebbar ist, dass die Sicherungsspange verliersicher in eine Montageposition an der Kugelpfanneneinheit gehalten ist. Die Vormontage kann somit in besonders einfacher Weise erfolgen. Die Vormontage kann weiter vereinfacht werden, wenn die Entnahme des Vormontagewerkzeugs aus dem inneren Hohlraum eine Überführung der Sicherungsspange in ihre Sicherungsposition bewirkt. Anspruch 10 definiert auch eine besonders vorteilhafte Ausgestaltung des Montagewerkzeugs, durch die dieses mit den Sperrzungen und/oder den Sicherungsabschnitten derart in Eingriff brinbar ist, dass die Sperrzungen beim Einstecken der Sicherungsspange in die Kugelpfanneneinheit voneinander wegbewegt werden.

Nach der weiteren bevorzugten Ausgestaltung gemäß Anspruch 11 ist die Sicherungsspange im Rahmen der Hauptmontage durch eine Bewegung des Kugelkopfs in Einführrichtung in ihre Montageposition überführbar. Eine weitere Bewegung des Kugelkopfs in Einführrichtung führt dann zum Eindringen des Kugelkopfs in den inneren Hohlraum der Kugelpfanne. Im Anschluss an die Hauptmontage ist die Sicherungsspange automatisch in ihre Sicherungsposition überführbar. Der Kugelkopf ist somit auf besonders einfache Weise in die Kugelpfanne einführbar und mit dieser verliersicher verbindbar.

Nach einer weiteren Lehre gemäß Anspruch 12 wird eine Antriebsanordnung zur Verstellung eines Verschlusselements eines Kraftfahrzeugs mit einer, insbesondere motorischen Antriebseinheit und mit einem dieser nachgeschalteten Vorschubgetriebe zur Längenverstellung der Antriebsanordnung und mit wenigstens einer vorschlagsgemäßen Anschlussgelenkanordnung, über die die Antriebsanordnung an dem Verschlusselement oder an dem Kraftfahrzeug im übrigen befestigbar ist, beansprucht.

Auf alle Ausführungen zur vorschlagsgemäßen Anschlussgelenkanordnung darf insoweit verwiesen werden.

Nach einer weiteren Lehre gemäß Anspruch 13 wird eine Verschlusselementanordnung mit einem Verschlusselement, dem eine vorschlagsgemäße Antriebsanordnung und/oder eine vorschlagsgemäße Anschlussgelenkanordnung zugeordnet ist beansprucht.

Auf alle Ausführungen zur vorschlagsgemäßen Anschlussgelenkanordnung und zur vorschlagsgemäßen Antriebsanordnung, darf insoweit verwiesen werden.

Nach einer weiteren Lehre gemäß Anspruch 14 wird ein Verfahren zur Demontage einer Anschlussgelenkanordnung zum Anschluss einer längenverstellbaren Antriebsanordnung an ein Kraftfahrzeug, insbesondere an ein Verschlusselement des Kraftfahrzeugs, beansprucht.

Auf alle Ausführungen zur vorschlagsgemäßen Anschlussgelenkanordnung, darf insoweit verwiesen werden.

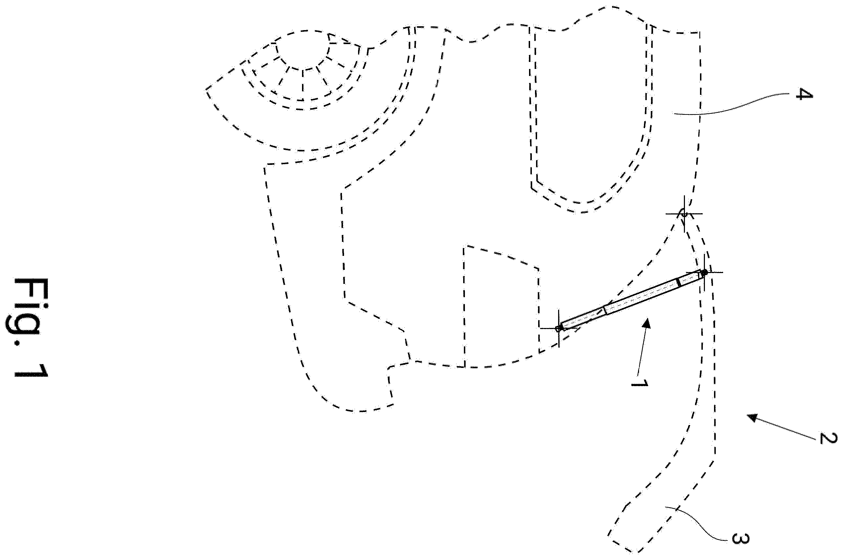

Im Folgenden wird die Erfindung anhand einer lediglich Ausführungsbeispiele darstellenden Zeichnung näher erläutert. In der Zeichnung zeigt
- Fig. 1: in einer ganz schematischen Darstellung den Heckbereich eines Kraftfahrzeugs mit einer Heckklappe, die mit einer vorschlagsgemäßen Antriebsanordnung angetrieben ist, die wiederum über eine vorschlagsgemäße Anschlussgelenkanordnung an der Heckklappe und dem Kraftfahrzeug im Übrigen angeschlossen ist,

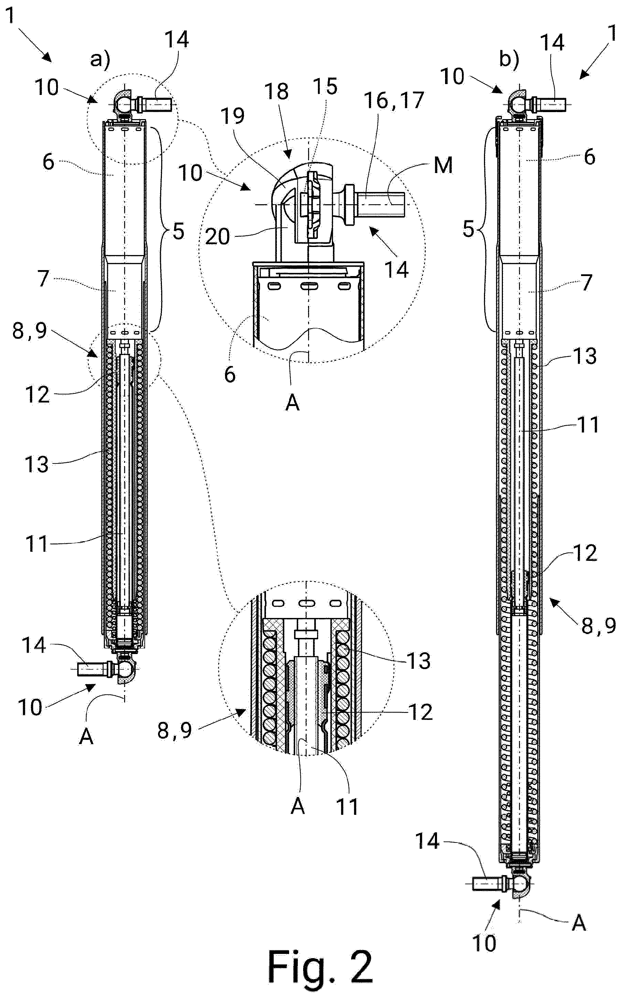

- Fig. 2: in einer geschnittenen Seitenansicht die Antriebsanordnung gemäß Fig. 1 a) in einer eingefahrenen Stellung und b) in einer ausgefahrenen Stellung,

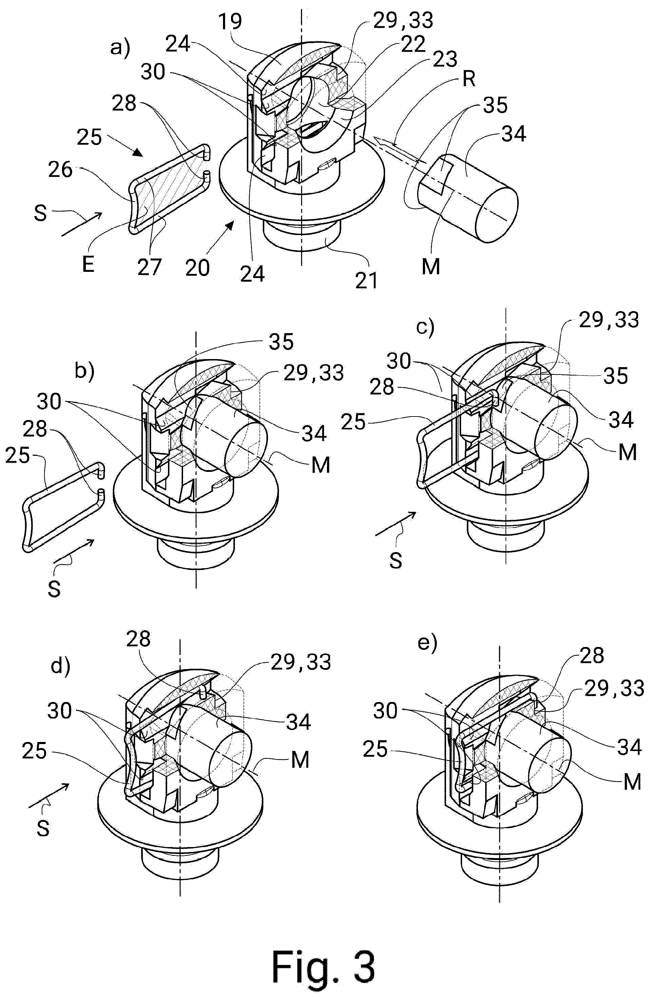

- Fig. 3: in einer perspektivischen Darstellung einer Kugelpfanneneinheit der Anschlussgelenkanordnung gemäß Fig. 1 während einer Vormontage a) mit einem Vormontagewerkzeug zu Beginn der Vormontage, b) mit dem in den inneren Hohlraum der Kugelpfanne eingeführten Vormontagewerkzeug, c) zu Beginn des Einfügens der Sicherungsspange in die Kugelpfanneneinheit, d) während des Einfügens der Sicherungsspange in die Kugelpfanneneinheit und e) mit in die Kugelpfanneneinheit eingefügter und in ihrer Vormontageposition befindlicher Sicherungsspange,

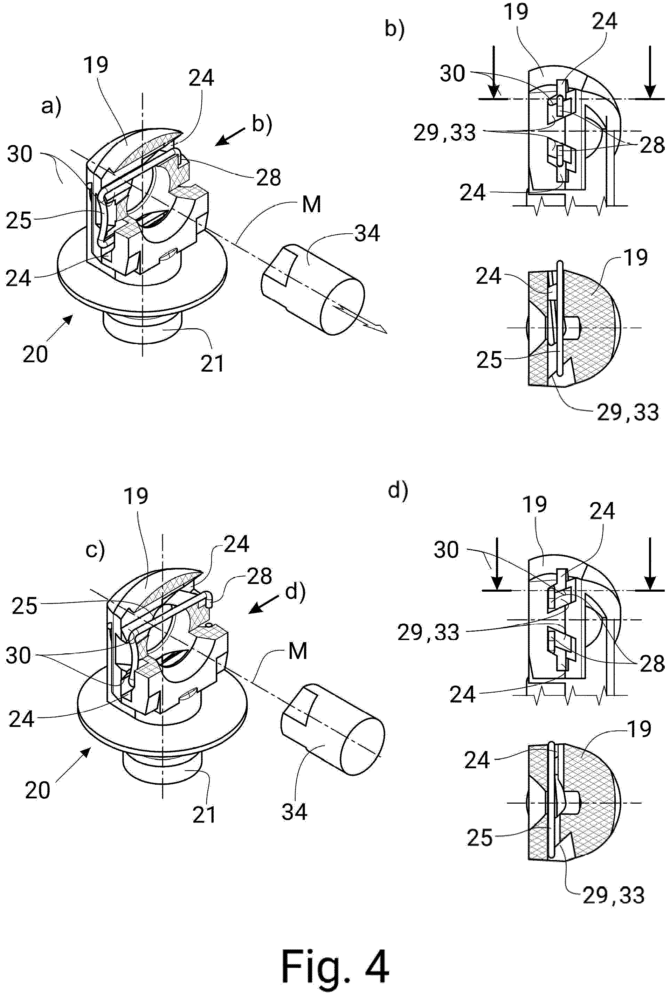

- Fig. 4: in einer perspektivischen Darstellung die Kugelpfanneneinheit aus Fig. 1 während der Vormontage a) während der Entnahme des Montagewerkzeugs aus dem inneren Hohlraum und der sich in ihrer Montageposition befindlichen Sicherungsspange, b) eine Seiten- und eine Querschnittsansicht der in Fig. 4a) gezeigten Kugelpfanneneinheit, c) die sich am Ende der Vormontage in ihrer Sicherungsposition befindliche Sicherungsspange und d) eine Seiten- und eine Querschnittsansicht der in Fig. 4c) gezeigten Kugelpfanneneinheit,

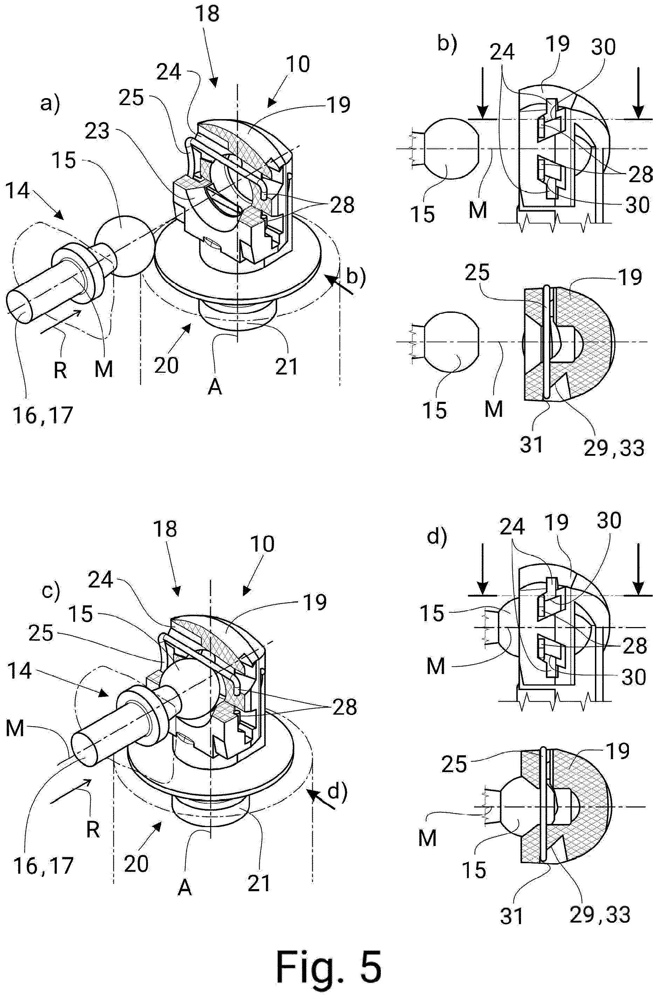

- Fig. 5: die Kugelgelenkanordnung gemäß Fig. 1 während einer Montage der Kugelgelenkanordnung a) in einer perspektivischen Ansicht vor dem Einfügen des Kugelkopfs in den inneren Hohlraum, b) eine Seiten- und eine Querschnittsansicht der in Fig. 5a) gezeigten Kugelgelenkanordnung, c) den mit der Sicherungsspange in Eingriff stehenden Kugelkopf beim Überführen der Sicherungsspange in ihre Montageposition und d) eine Seiten- und eine Querschnittsansicht der in Fig. 5c) gezeigten Kugelgelenkanordnung,

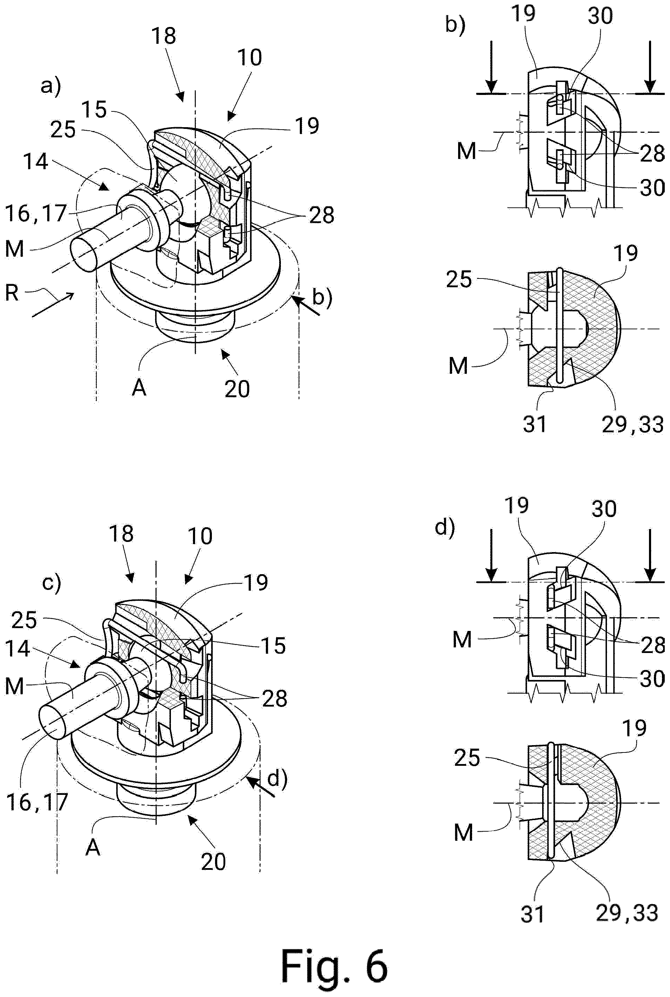

- Fig. 6: die Kugelgelenkanordnung gemäß Fig. 1 während der Montage der Kugelgelenkanordnung a) mit der sich in ihrer Montageposition befindlichen Sicherungsspange, b) eine Seiten- und Querschnittsansicht der Kugelgelenkanordnung aus Fig. 6a), c) zum Ende der Montage mit sich in ihrer Sicherungsposition befindlichen Sicherungsspange und d) eine Seiten- und Querschnittsansicht der Kugelgelenkanordnung aus Fig. 6c) und

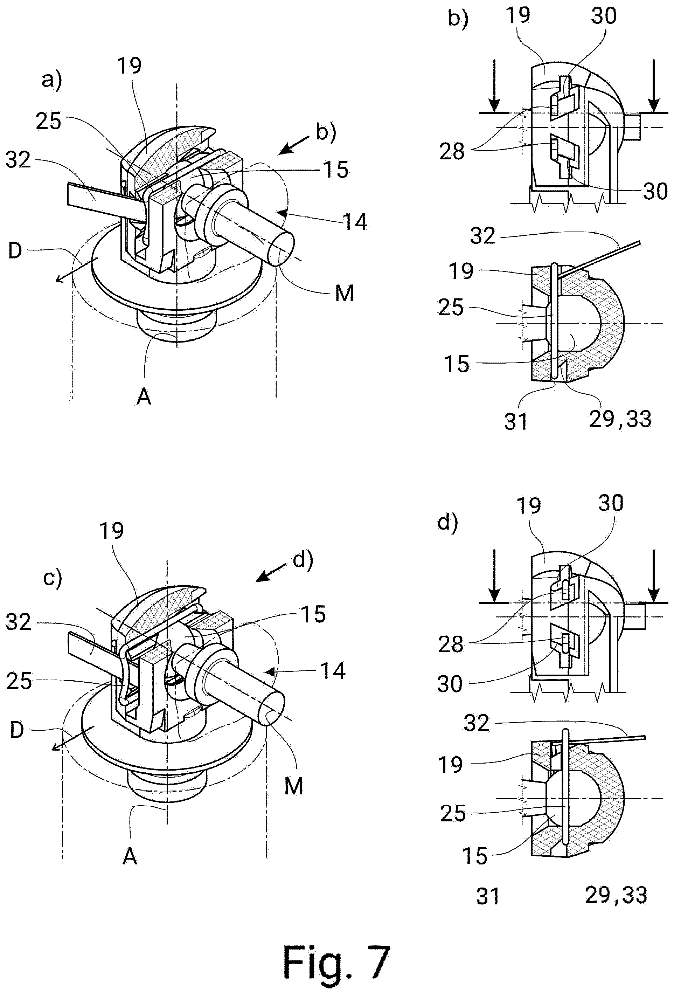

- Fig. 7: die Kugelgelenkanordnung gemäß Fig. 1 während einer Demontage der Kugelgelenkanordnung a) vor dem Aufbringen einer Demontagekraft auf den Bügelabschnitt der Sicherungsspange, b) eine Seiten- und Querschnittsansicht der Kugelgelenkanordnung aus Fig. 7a), c) die durch Aufbringen einer Demontagekraft auf den Bügelabschnitt in eine Montageposition überführte Sicherungsspange und d) eine Seiten- und Querschnittsansicht der Kugelgelenkanordnung aus Fig. 7c).

Die in der Zeichnung dargestellte längenverstellbare Antriebsanordnung 1 ist als Spindelantrieb ausgestaltet und einer Verschlusselementanordnung 2, beispielsweise einer Heckklappenanordnung zugeordnet, die wiederum mit einem Verschlusselement 3, hier einer Heckklappe, ausgestattet ist. Die Verschlusselementanordnung 2 ist einem Kraftfahrzeug 4 zugeordnet, wie Fig. 1 zeigt.

Die in Fig. 1 dargestellte Antriebsanordnung 1 dient der vorzugsweise motorischen Verstellung des hier beispielhaft als Heckklappe ausgestalteten Verschlusselements 3. Hinsichtlich des weiteren Verständnisses des Begriffs "Verschlusselement" 3 darf auf den einleitenden Teil der Beschreibung verwiesen werden. Im Folgenden wird die Erfindung anhand eines als Heckklappe ausgestalteten Verschlusselements 3 erläutert, da gerade hier aufgrund der vergleichsweise hohen Kräfte, die durch das Gewicht des Verschlusselements 3 bedingt sind, eine besonders hohe Zuverlässigkeit der Antriebsanordnung 1 gegeben sein muss.

Die als Spindelantrieb ausgestaltete Antriebsanordnung 1 ist mit einer hier und vorzugsweise motorischen Antriebseinheit 5 ausgestattet, die einen hier und vorzugsweise elektrischen Antriebsmotor 6 und ein dem Antriebsmotor 6 nachgeschaltetes Untersetzungsgetriebe 7 aufweist, wie in Fig. 2 gezeigt ist. Der Antriebseinheit 5 insgesamt antriebstechnisch nachgeschaltet ist hier und vorzugsweise ein Vorschubgetriebe 8 zur Längenverstellung der Antriebsanordnung 1. Das Vorschubgetriebe 8 ist hier und vorzugsweise als Spindel-Spindelmuttergetriebe 9 mit geometrischer Spindelachse A zur Erzeugung von linearen Antriebsbewegungen zwischen zwei Anschlussgelenkanordnungen 10 ausgestaltet. Das Spindel-Spindelmuttergetriebe 9 weist in an sich üblicher Weise eine Spindel 11 und eine damit in kämmendem Eingriff stehende Spindelmutter 12 auf. Die Antriebsanordnung 1 kann alternativ auch motorlos ausgebildet sein.

Die Antriebsanordnung 1 ist zwischen der in Fig. 2a) dargestellten eingefahrenen Stellung und der in Fig. 2b) gezeigten ausgefahrenen Stellung längenverstellbar. So ist bei dem hier gewählten Ausführungsbeispiel die Spindel 11 der in Fig. 2 oberen Anschlussgelenkanordnung 10 axialfest zugeordnet, wohingegen die Spindelmutter 12 der in Fig. 2 unteren Anschlussgelenkanordnung 10 axialfest und drehfest zugeordnet ist. Durch Betätigen der Antriebseinheit 5 wird die Spindel 11 in Rotation versetzt und die Spindelmutter 12 linear relativ zur Spindel 11 bewegt. Auch eine umgekehrte Anordnung mit einer drehfesten Spindel 11 und einer drehbaren Spindelmutter 12 ist möglich.

Die Antriebsanordnung 1 ist in dem in Fig. 1 dargestellten montierten Zustand antriebstechnisch mit dem Verschlusselement 3 einerseits und dem Kraftfahrzeug 4 im Übrigen andererseits gekoppelt. Dabei übernimmt die Antriebsanordnung 1 auf die zuvor beschriebene Weise die hier und vorzugsweise motorische Verstellung des Verschlusselements 3, hier der Heckklappe, zwischen der in Fig. 1 dargestellten Offenstellung und einer nicht dargestellten Schließstellung. Der Vollständigkeit halber sei erwähnt, dass die hier als Spindelantrieb beispielhaft dargestellte Antriebsanordnung 1 auch manuell betätigbar ist, das heißt, der Anwender das Verschlusselement 3 auch manuell öffnen und/oder schließen kann. Grundsätzlich kann auch anstelle einer motorischen Antriebseinheit 5 eine ausschließlich kraftgetriebene Antriebseinheit 5 vorgesehen sein, die eine Verstellung der Antriebsanordnung 1 von der eingefahrenen in die ausgefahrene Stellung allein über einen Kraftspeicher, wie beispielsweise eine Druckfeder 13, bewirkt. Eine solche Druckfeder 13 ist auch bei dem dargestellten Ausführungsbeispiel vorgesehen, hier aber zur Unterstützung der motorischen Antriebseinheit 5 bei der Bewegung von der eingefahrenen in die ausgefahrene Stellung.

Bei dem in Fig. 1 dargestellten und insoweit bevorzugten Ausführungsbeispiel sind insgesamt zwei Antriebsanordnungen 1, hier und vorzugsweise zwei Spindelantriebe, vorgesehen, die an zwei gegenüberliegenden Randbereichen einer Verschlusselementöffnung, hier einer Heckklappenöffnung, angeordnet sind. Grundsätzlich kann es aber auch vorgesehen sein, dass lediglich eine solche Antriebsanordnung 1 vorgesehen ist, die dann insbesondere an einem der Randbereiche der Verschlusselementöffnung angeordnet ist.

Wie bereits zuvor erläutert, ist die vorschlagsgemäße Antriebsanordnung 1 über zwei Anschlussgelenkanordnungen 10 am Verschlusselement 3 des Kraftfahrzeugs 4 einerseits und am Kraftfahrzeug 4 im Übrigen andererseits angeschlossen. Besonders bevorzugt ist ausschließlich oder zumindest die die Antriebsanordnung 1 mit dem Verschlusselement 3 verbindende Anschlussgelenkanordnung 10 auf die im Folgenden beschriebene, vorschlagsgemäße Weise ausgestaltet. Grundsätzlich kann aber auch die andere Anschlussgelenkanordnung 10 oder können beide Anschlussgelenkanordnungen 10 auf die vorschlagsgemäße Weise ausgestaltet sein.

Die vorschlagsgemäße Anschlussgelenkanordnung 10 weist einen Kugelbolzen 14 auf, wobei der Kugelbolzen 14 einen Kugelkopf 15 und einen Bolzenschaft 16 mit einem Anschlussabschnitt 17 zur Befestigung des Kugelbolzens 14 an dem Kraftfahrzeug 4 oder der Antriebsanordnung 1, hier am Verschlusselement 3 beziehungsweise an dem Kraftfahrzeug 4 im Übrigen, aufweist.

Weiter weist die vorschlagsgemäße Anschlussgelenkanordnung 10 eine Kugelpfanneneinheit 18 auf, die im montierten Zustand mit dem Kugelbolzen 14 ein Kugelgelenk bildet. Die Kugelpfanneneinheit 18 weist eine Kugelpfanne 19 und einen Kugelpfannenschaft 20 mit einem Befestigungsabschnitt 21 zur Befestigung der Kugelpfanneneinheit 18 an dem Kraftfahrzeug 4 oder der Antriebsanordnung 1, hier jeweils an der Antriebsanordnung 1, auf. Die Kugelpfanne 19 weist eine geometrische Mittelachse M auf.

Die Kugelpfanne 19 weist darüber hinaus einen radial innenseitigen Hohlraum 22 zur Aufnahme des, im Zuge der Montage des Kugelgelenks, in einer axialen Einführrichtung R entlang der geometrischen Mittelachse M eingeführten Kugelkopfes 15. Der innenseitige Hohlraum 22 weist eine Einführungsöffnung 23 zum Einführen des Kugelkopfes 15 in den innenseitigen Hohlraum 22 auf. Hier und vorzugsweise verläuft die geometrische Mittelachse M senkrecht zur Einführungsöffnung 23 der Kugelpfanne 19. Darüber hinaus weist die Kugelpfanne 19 mehrere von außen in den inneren Hohlraum 22 führende Durchführungen 24 auf. Die Durchführungen 24 verlaufen von einer radialen Außenseite der Kugelpfanne 19 zu dem radial innenseitigen Hohlraum 22. "Radial" ist dabei bezogen auf die zur Einführrichtung R koaxial angeordneten geometrischen Mittelachse M der Kugelpfanne 19.

Ferner weist die vorschlagsgemäße Anschlussgelenkanordnung 10 eine Sicherungsspange 25 (Fig. 3a)) zur Arretierung des Kugelkopfes 15 in der Kugelpfanne 19 nach der Montage auf. Die Sicherungsspange 25 weist wiederum einen, hier und vorzugsweise gebogenen, Bügelabschnitt 26 und damit verbundene Sperrzungen 27 auf. Hier sind genau zwei Sperrzungen 27 vorgesehen, die jeweils endseitig am Bügelabschnitt 26 angeordnet sind.

Wie insbesondere Fig. 3a) zeigt, erstrecken sich die Sperrzungen 27 winkelig zum Bügelabschnitt 26, so dass die Sperrzungen 27 einen vom Bügelabschnitt 26 abgewinkelten Abschnitt der Sicherungsspange 25 bilden. Die Sperrzungen 27 haben hier und vorzugsweise einen wenigstens abschnittsweise geraden Verlauf. Die Sicherungsspange 25 ist quer zur geometrischen Kugelpfannenachse in die Kugelpfanne 19 einsteckbar. Entsprechend erstrecken sich der Bügelabschnitt 26 und die damit verbundenen Sperrzungen 27 entlang einer Ebene E, die quer, hier und vorzugsweise senkrecht, zur Mittelachse M der Kugelpfanne 19 verläuft.

Die Sicherungsspange 25 ist hier und vorzugsweise aus Metall, insbesondere Federstahl, gebildet. Hier und vorzugsweise ist die Sicherungsspange 25 als einstückige, drahtförmige, insbesondere aus einem Federdraht ausgebildete, Sicherungsspange 25 ausgebildet. Anstelle einer drahtförmigen Sicherungsspange 25 kann grundsätzlich auch eine bandförmige Sicherungsspange 25 vorgesehen sein. Im letztgenannten Fall kann die Sicherungsspange 25 als Stanz-Biegeteil und/oder einstückig ausgestaltet sein. "Bandförmig" meint, dass die Längserstreckung der Sicherungsspange 25 größer als ihre Breitenerstreckung ist, die wiederum größer als ihre Materialstärke (Dickenerstreckung) ist. Die Längserstreckung ist die Erstreckung vom freien Ende der einen Sperrzunge 27 über den Bügelabschnitt 26 zum freien Ende der anderen Sperrzunge 27. Die Breitenerstreckung ist entsprechend die zur Längserstreckung und Dickenerstreckung orthogonale Erstreckung.

Wie die Fig. 6c) veranschaulicht, erstrecken sich die jeweiligen Sperrzungen 27 vom Bügelabschnitt 26 durch eine jeweils zugeordnete Durchführung 24 in den Hohlraum 22. Die Sperrzungen 27 hintergreifen den Kugelkopf 15 im montierten Zustand an seiner dem Bolzenschaft 16 zugewandten Seite, wie in Fig. 2 und Fig. 6a) gezeigt ist. Auf diese Weise wird der Kugelbolzen 14 gegen ein Herausziehen entgegen der Einführrichtung R aus dem Hohlraum 22 gesichert. Die Sicherungsspange 25 bewirkt hier und vorzugsweise allein die besagte Arretierung.

Wie durch den Übergang von Fig. 7a) zu Fig. 7c) zu erkennen ist, ist die Sicherungsspange 25 im Rahmen einer Demontage von einer Sicherungsposition (Fig. 7a)), in der die Sicherungsspange 25 den Kugelkopf 15 in der Kugelpfanne 19 hält, in eine Demontageposition (Fig. 7c)), in der der Kugelbolzen 14 von der Kugelpfanneneinheit 18 lösbar ist, verschiebbar. Unter dem Begriff "Demontage" ist vorliegend das Lösen des Kugelbolzens 14 von der Kugelpfanneneinheit 18 zu verstehen. Unter dem Begriff "verschiebbar" ist vorliegend zu verstehen, dass die Sicherungsspange 25 als Einheit und nicht nur abschnittsweise relativ zur Kugelpfanne 19 verschiebbar ausgebildet ist.

Wesentlich ist nun, dass die Sicherungsspange 25 in der Demontageposition verliersicher an der Kugelpfanneneinheit 18 gehalten ist. Auf diese Weise ist sichergestellt, dass die Sicherungsspange 25 auch im Rahmen einer Demontage zuverlässig an der Kugelpfanneneinheit 18 gehalten ist, so dass ein Lösen der Sicherungsspange 25 von der Kugelpfanneneinheit 18 verhindert wird. Auf diese Weise kann eine, beispielsweise vorübergehende, Demontage im Rahmen von Reparatur- und/oder Austauscharbeiten besonders einfach erfolgen, ohne dass die Sicherungsspange 25 von der Kugelpfanneneinheit 18 getrennt und auf diese Weise verloren gehen kann.

Die Sicherungsspange 25 ist in Fig. 3a) in ihrem unmontierten Zustand gezeigt. Unter dem Begriff "unmontierter Zustand der Sicherungsspange" 25 ist vorliegend zu verstehen, dass die Sicherungsspange 25 nicht mit der Kugelpfanneneinheit 18 verbunden ist. In der in den Figuren gezeigten und insoweit bevorzugten Ausführungsform ist vorgesehen, dass wenigstens eine Sperrzunge 27 an ihrer dem Bügelabschnitt 26 abgewandten Seite einen von der Sperrzunge 27, im Wesentlichen senkrecht, abgewinkelten Sicherungsabschnitt 28 aufweist. Erfindungsgemäß ist vorgesehen, dass der Sicherungsabschnitt 28 der anderen Sperrzunge 27 zugewandt ist. Bei der in den Figuren gezeigten und insoweit bevorzugten Ausführungsform ist darüber hinaus vorgesehen, dass beide Sperrzungen 27 einen Sicherungsabschnitt 28 aufweisen und dass die beiden Sicherungsabschnitte 28 einander zugewandt sind. Dies führt zu einer gleichmäßig ausgebildeten Verliersicherung der Sicherungsspange 25 an der Kugelpfanneneinheit 18, wie nachfolgend noch erläutert wird.

In ihrer Demontageposition ist die Sicherungsspange 25 verliersicher an der Kugelpfanneneinheit 18 gehalten. Die Verliersicherheit kann auf besonders einfache Weise erreicht werden, wenn der Sicherungsabschnitt 28 im montierten Zustand der Sicherungsspange 25 mit einer im Wesentlichen nach außen gerichteten und dem Bügelabschnitt 26 abgewandten Anschlagsfläche 29 der Kugelpfanneneinheit 18 derart in Eingriff steht oder derart in Eingriff bringbar ist, dass die Sicherungsspange 25 verliersicher an der Kugelpfanneneinheit 18 gehalten ist. Der Begriff "montierter Zustand der Sicherungsspange" ist vorliegend darauf bezogen, dass die Kugelpfanneneinheit 18 mit der Sicherungsspange 25 verbunden ist, wie im Folgenden noch erläutert wird. Der montierte Zustand der Sicherungsspange 25 ist in Fig. 1, Fig. 2, Fig. 4, Fig. 5, Fig. 6 und Fig. 7 gezeigt.

Die Anschlagfläche bildet somit einen Hinterschnitt, den der Sicherungsabschnitt 28 hintergreift, so dass die Sicherungsspange 25 formschlüssig gegen ein Lösen aus der Kugelpfanneneinheit 18 gehalten ist. Die Anschlagsfläche 29 wirkt dabei derart mit dem Sicherungsabschnitt 28 zusammen, dass die Sicherungsspange 25 nicht durch eine auf den Bügelabschnitt 26 in die dem Sicherungsabschnitt 28 entgegengesetzte Richtung einwirkende Kraft von der Kugelpfanneneinheit 18 gelöst werden kann. Die Sicherungsspange 25 ist dann gegen ein Herausziehen aus der Kugelpfanneneinheit 18 an dieser formschlüssig und damit verliersicher gehalten.

Des Weiteren ist hier und vorzugsweise vorgesehen, dass die Sperrzungen 27 im montierten Zustand der Sicherungsspange 25 mit jeweils einem Führungsabschnitt 30 der Kugelpfanneneinheit 18 in Eingriff stehen und dass die Führungsabschnitte 30 quer zur geometrischen Mittelachse M abgeschrägt sind und so einen rampenförmigen Abschnitt derart ausbilden, dass sich der Abstand zwischen den beiden rampenförmigen Führungsabschnitten 30 entlang der geometrischen Mittelachse M in Richtung zur Einführungsöffnung 23 hin verringert. Somit wird auf einfache Weise eine zuverlässige Möglichkeit zur Überführung der Sicherungsspange 25 von ihrer Sicherungsposition in ihre Demontageposition geschaffen, wie im Folgenden noch erläutert wird. Die rampenförmigen Führungsabschnitte 30 sind beispielhaft in Fig. 3a) gezeigt. Somit wird auf einfache Weise eine zuverlässige Möglichkeit zur Überführung der Sicherungsspange 25 von ihrer Sicherungsposition in ihre Demontageposition geschaffen, wie im Folgenden noch erläutert wird. Die rampenförmigen Führungsabschnitte 30 sind beispielhaft in Fig. 3a) gezeigt.

Weiter ist hier und vorzugsweise vorgesehen, dass die Sicherungsspange 25 in ihrer Sicherungsposition einen geringeren Abstand zur Einführungsöffnung 23 aufweist als in ihrer Demontageposition. Die Sicherungsposition der Sicherungsspange 25 ist in Fig. 6c) und Fig. 6d) gezeigt. Wie dort zu erkennen ist, liegen die Sperrzungen 27 gegen jeweils eine Begrenzungsfläche 31 an, wobei jede Begrenzungsfläche 31 jeweils einen rampenförmigen Führungsabschnitt 30 in Richtung zur Einführungsöffnung 23 begrenzt. Die Sicherungsspange 25 liegt hier und vorzugsweise in ihrer Sicherungsposition gegen die Begrenzungsflächen 31 an und ist dann an der am nächsten zur Einführungsöffnung 23 gelegenen Stelle des rampenförmigen Führungsabschnitts 30 angeordnet. Die Begrenzungsfläche 31 verhindert ein weiteres Verschieben der Sicherungsspange 25 aus ihrer Sicherungsposition entgegen der Einführrichtung R.

In Fig. 6c) und Fig. 6d) sichert die Sicherungsspange 25 den Kugelkopf 15 gegen ein Herauslösen aus dem inneren Hohlraum 22 der Kugelpfanneneinheit 18, da in der Sicherungsposition der maximale Abstand der beiden Sperrzungen 27 zueinander geringer ist als der Durchmesser des Kugelkopfes 15.

Eine besonders sichere Verbindung zwischen dem Kugelbolzen 14 und der Kugelpfanneneinheit 18 kann erreicht werden, wenn die Sicherungsspange 25 in ihrer Sicherungsposition gehalten ist. Hier und vorzugsweise ist vorgesehen, dass die Sperrzungen 27 in der Sicherungsposition derart gegen die Führungsabschnitte 30 anliegen, dass die Sicherungsspange 25 in ihrer Sicherungsposition gehalten ist. Das Anliegen der Sperrzungen 27 gegen die Führungsabschnitte 30 ist hier und vorzugsweise dadurch realisiert, dass die Sperrzungen 27 in der Sicherungsposition gegeneinander verspannt sind. Unter dem Begriff "gegeneinander verspannt" ist vorliegend zu verstehen, dass jede Sperrzunge 27 in Richtung der jeweils anderen Sperrzunge 27 gespannt ist. Die Sperrzungen 27 üben dann eine Kraft quer zur geometrischen Mittelachse M auf die Führungsabschnitte 30 auf, wodurch die Sicherungsspange 25 in der Sicherungsposition gegen eine Verschiebung entlang der geometrischen Mittelachse M gehalten ist.

Gleichzeitig wirken die beiden Sicherungsabschnitte 28 derart mit der Anschlagsfläche 29 zusammen, dass die Sicherungsspange 25 in ihrer Sicherungsposition gegen ein Herausziehen entlang der Ebene E in Richtung des Bügelabschnitts 26 aus der Kugelpfanneneinheit 18 verliersicher gehalten ist.

Alternativ ist es auch möglich, dass die Sperrzungen 27 in der Sicherungsposition nicht gegeneinander verspannt sind. Ein Verschieben der Sicherungsspange 25 entlang der geometrischen Mittelachse M in Einführrichtung R führt dann dazu, dass die Sperrzungen 27 gegeneinander verspannt werden, wodurch der Widerstand gegen ein solches Verschieben ansteigt und auf diese Weise begrenzt und/oder unterbunden wird.

Hier und vorzugsweise ist vorgesehen, dass die Sperrzungen 27 in der Demontageposition gegeneinander verspannt sind, so dass die Sperrzungen 27 in der Demontageposition eine Kraft auf die rampenförmigen Führungsabschnitte 30 ausüben. Die rampenförmigen Führungsabschnitt 30 sind dabei hier und vorzugsweise derart geformt und ausgebildet, dass die Sicherungsspange 25 aufgrund der gegeneinander verspannten Sperrzungen 27 automatisch in ihre Sicherungsposition überführt wird.

Weiter ist hier und vorzugsweise vorgesehen, dass die Sicherungsspange 25 durch eine in einer Demontagerichtung D (Fig. 7) auf den Bügelabschnitt 26 einwirkenden Demontagekraft in die Demontageposition bringbar ist. Die Demontagerichtung D ist hier und vorzugsweise im Wesentlichen quer zur Einführrichtung R, insbesondere radial zur geometrischen Mittelachse M der Kugelpfanne 19 ausgerichtet. Die Sicherungsspange 25 kann somit durch eine in lediglich einer Richtung radial auf den Bügelabschnitt 26 einwirkenden Demontagekraft in besonders einfacher Weise in ihre Demontageposition verschoben werden. Dieser Vorgang ist in Fig. 7 im Einzelnen gezeigt. Der Bügelabschnitt 26 kann, beispielsweise mit Hilfe eines Werkzeugs 32, insbesondere eines Schlitzschraubendrehers, ergriffen werden, wie in Fig. 7a) und Fig. 7b) gezeigt ist. Durch Einleiten einer Kraft in den Bügelabschnitt 26 in Demontagerichtung D, die radial zur geometrischen Mittellinie der Kugelpfanneneinheit 18 vom Sicherungsabschnitt 28 zum Bügelabschnitt 26 verläuft, wird die Sicherungsspange 25 in ihre Demontageposition überführt. Die Demontageposition ist in Fig. 7c) und Fig. 7d) gezeigt.

Es ist im Übrigen hier und vorzugsweise vorgesehen, dass die Sperrzungen 27 in der Demontageposition derart gegeneinander verspannt sind, dass die Sicherungsspange 25 nach Wegfall der Demontagekraft automatisch in ihre Sicherungsposition überführt wird. Die Sicherungsspange 25 nimmt dann ohne eine äußere Krafteinbringung in vorteilhafter Weise ihre Sicherungsposition ein.

Eine vorteilhafte Überführung der Sicherungsspange 25 in ihre Demontageposition wird erreicht, wenn die Sicherungsspange 25 durch eine Bewegung entlang der geometrischen Mittelachse M und eine Bewegung quer zur geometrischen Mittelachse M in ihre Demontageposition bringbar ist, wie beim Übergang von Fig. 7b) zu Fig. 7d) verdeutlicht wird. Die Bewegung quer zur geometrischen Mittelachse M bewirkt, dass der Bügelabschnitt 26 in radialer Richtung von der Kugelpfanneneinheit 18 wegbewegt wird, wodurch der Bügelabschnitt 26 in Richtung der Demontageposition zunehmend besser zugänglich wird, so dass die Sicherungsspange 25 in besonders sicherer Weise in ihrer Demontageposition gehalten werden kann.

Zum einfachen Lösen des Kugelkopfes 15 aus der Kugelpfanne 19 ist vorzugsweise vorgesehen, dass die Sperrzungen 27 in der Demontageposition derart weit voneinander beabstandet sind, dass der Kugelkopf 15 zwischen den beiden Sperrzungen 27 durchführbar ist. Der Kugelkopf 15 kann dann mit einem besonders geringen Kraftaufwand entgegen der Einführrichtung R aus der Kugelpfanne 19 gelöst werden.

Die vorbeschriebene Kinematik der Sicherungsspange 25 bei ihrem Übergang von ihrer Sicherungsposition in ihre Demontageposition lässt sich auf besonders einfache Weise realisieren, wenn die Anschlagsfläche 29 quer zur geometrischen Mittelachse M abgeschrägt ist und so einen rampenförmigen Anschlagabschnitt 33 derart ausbildet, dass sich der Abstand zwischen dem rampenförmigen Anschlagabschnitt 33 und der geometrischen Mittelachse M in Richtung zur Einführungsöffnung 23 hin derart vergrößert, dass die Sicherungsspange 25 durch eine Bewegung entlang der geometrischen Mittelachse M und eine Bewegung quer zur geometrischen Mittelachse M in die Demontageposition bringbar ist. Wie durch den Übergang von Fig. 7b) zu Fig. 7d) gezeigt ist, gleiten die beiden Sicherungsabschnitte 28 beim Überführen der Sicherungsspange 25 von ihrer Sicherungsposition in ihre Demontageposition den rampenförmige Anschlagabschnitt 33 entlang, wodurch die Sicherungsspange 25 eine Bewegung entlang der geometrischen Mittelachse M in Einführrichtung R und quer dazu erfährt.

Gleichzeitig werden die beiden Sperrzungen 27 entlang der rampenförmigen Führungsabschnitte 30 derart bewegt, dass die beiden Sperrzungen 27 voneinander wegbewegt werden, wodurch die Verspannung der beiden Sperrzungen 27 gegeneinander vergrößert wird. Wird die Sicherungsspange 25 aus ihrer in Fig. 7c) und Fig. 7d) gezeigten Demontageposition freigegeben, so führt die Verspannung der beiden Sperrzungen 27 gegeneinander dazu, dass die Sicherungsspange 25 automatisch in ihre in Fig. 7a) und Fig. 7b) gezeigte Sicherungsposition übergeht.

Die Sicherungsspange 25 ist im Rahmen einer Demontage der Anschlussgelenkanordnung 10 an der Kugelpfanneneinheit 18 verliersicher gehalten, wie oben beschrieben worden ist. Für eine einfach durchzuführende Montage der Anschlussgelenkanordnung 10 ist vorzugsweise vorgesehen, dass die Sicherungsspange 25 im Rahmen einer Vormontage der Anschlussgelenkanordnung 10 derart in die Kugelpfanneneinheit 18 in einer Montagerichtung S, insbesondere quer zur geometrischen Mittelachse M, in eine Vormontageposition einschiebbar ist, in der die Sicherungsspange 25 verliersicher in der Kugelpfanneneinheit 18 gehalten ist. Die Vormontage der Anschlussgelenkanordnung 10 ist in Fig. 3 und Fig. 4 im Einzelnen gezeigt. Unter dem Begriff "Vormontage der Anschlussgelenkanordnung" 10 ist vorliegend die Verbindung zwischen der Kugelpfanneneinheit 18 und der Sicherungsspange 25 zu verstehen.

Hier und vorzugsweise befindet sich die Vormontageposition der Sicherungsspange 25 in Einführrichtung R zwischen der Sicherungsposition und der Demontageposition, wie aus der Zusammenschau der Fig. 6d) (Sicherungsposition), Fig. 3e) (Vormontageposition) und Fig. 7d) (Demontageposition) zu erkennen ist.

In der in den Figuren gezeigten und insoweit bevorzugten Ausführungsform ist vorgesehen, dass die Sicherungsspange 25 unter Verwendung eines in den inneren Hohlraum 22 der Kugelpfanne 19 eingeführten Vormontagewerkzeugs 34 in die Kugelpfanneneinheit 18 einschiebbar ist. Wie der Übergang von Fig. 3a) zu Fig. 3b) zeigt, wird im Rahmen der Vormontage zunächst ein Vormontagewerkzeug 34, hier und vorzugsweise in Einführrichtung R, in den inneren Hohlraum 22 der Kugelpfanne 19 eingeführt. Im Anschluss daran kann die Sicherungsspange 25 in Montagerichtung S in die Durchführungen 24 der Kugelpfanneneinheit 18 eingesteckt werden (Fig. 3b) bis Fig. 3e)) bis die Sicherungsspange 25 ihre in Fig. 3e) gezeigte Vormontageposition erreicht hat. In ihrer Vormontageposition stehen die Sicherungsabschnitte 28 mit der Anschlagsfläche 29 der Kugelpfanne 19 derart in Eingriff oder sind derart mit dieser in Eingriff bringbar, dass die Sicherungsspange 25 verliersicher an der Kugelpfanneneinheit 18 gehalten ist.

Sobald die Sicherungsspange 25 ihre Vormontageposition erreicht hat, kann das Vormontagewerkzeug 34 aus dem inneren Hohlraum 22 entnommen werden. Die Vormontage kann in besonders einfacher Weise durchgeführt werden, wenn, wie in Fig. 4 gezeigt ist, die Entnahme des Vormontagewerkzeugs 34 aus dem inneren Hohlraum 22 eine Überführung der Sicherungsspange 25 in ihre Sicherungsposition bewirkt. In der Vormontageposition sind die Sperrzungen 27 gegeneinander verspannt, wodurch die Sperrzungen 27 nach Entnahme des Vormontagewerkzeugs 34 (Fig. 4a)) die rampenförmigen Führungsabschnitte 30 entlang der geometrischen Mittelachse M zur Einführungsöffnung 23 gerichtet abgleiten, wodurch die Sicherungsspange 25 automatisch, ohne Aufbringen einer externen Kraft, in ihre Sicherungsposition verschoben wird.

In der in den Figuren gezeigten und insoweit bevorzugten Ausführungsform ist vorgesehen, dass das Vormontagewerkzeug 34 zwei im Wesentlichen radial äußere Führungsflächen 35 aufweist, die beim Einstecken der Sicherungsspange 25 in die Kugelpfanneneinheit 18 jeweils derart mit einer zugeordneten Sperrzunge 27 und/oder einem zugeordneten Sicherungsabschnitt 28 in Eingriff bringbar sind, dass die Sperrzungen 27 beim Einstecken in die Kugelpfanneneinheit 18 voneinander wegbewegt werden, wie in Fig. 3c) und Fig. 3d) gezeigt ist. Somit kann die Sicherungsspange 25 auf besonders einfache Weise mit der Kugelpfanneneinheit 18 verbunden werden, so dass die Sicherungsabschnitte 28 mit der Anschlagsfläche 29 jeweils einen Hinterschnitt in einer zur Montagerichtung S entgegengesetzten Richtung ausbilden, wodurch die Sicherungsspange 25 durch die Vormontage verliersicher an der Kugelpfanneneinheit 18 befestigt wird, wie beim Übergang von Fig. 3d) zu Fig. 3e) gezeigt ist.

Weiter ist hier und vorzugsweise vorgesehen, dass die Sicherungsspange 25 im Rahmen einer Hauptmontage der Anschlussgelenkanordnung 10 durch eine Bewegung des Kugelkopfs 15 in Einführrichtung R in den inneren Hohlraum 22 zunächst in eine Montageposition überführbar ist, dass eine weitere Bewegung des Kugelkopfes 15 in Einführrichtung R das Einführen des Kugelkopfs 15 in den Hohlraum 22 der Kugelpfanne 19 bewirkt und dass die Sicherungsspange 25 im Anschluss an die Hauptmontage automatisch in ihre Sicherungsposition überführbar ist. Unter dem Begriff "Hauptmontage" ist vorliegend die Ausbildung der Anschlussgelenkanordnung 10 durch die Verbindung der Kugelpfanneneinheit 18 mit dem Kugelbolzen 14 zu verstehen, wie in Fig. 5 und Fig. 6 gezeigt ist.

Der Kugelbolzen 14 ist in Einführrichtung R in den inneren Hohlraum 22 der Gelenkpfanne einführbar, wie in Fig. 5a) angedeutet ist. Während der Einführbewegung entlang der Einführrichtung R kommt der Kugelkopf 15 mit den Sperrzungen 27 der sich in ihrer Sicherungsposition befindlichen Sicherungsspange 25 derart in Eingriff (Fig. 5c) und Fig. 5d)), dass eine weitere Bewegung des Kugelbolzens 14 in Einführrichtung R eine Überführung der Sicherungsspange 25 in ihre Montageposition (Fig. 6a) und Fig. 6b)) bewirkt. In der Montageposition sind die beiden Sperrzungen 27 derart weit voneinander beabstandet, dass der Kugelkopf 15 zwischen den beiden Sperrzungen 27 durchführbar ist. Hat der Kugelkopf 15 seine bestimmungsgemäße Position innerhalb des inneren Hohlraums 22 der Gelenkpfanne erreicht, so wirkt auf die Sperrzungen 27 keine Kraft mehr in Einführrichtung R. Aufgrund der gegeneinander verspannten Sperrzungen 27, gleiten diese den Kugelkopf 15 und/oder die rampenförmigen Führungsabschnitte 30 entlang in ihre in Fig. 6c) und Fig. 6d) gezeigte Sicherungsposition. In der Sicherungsposition ist der kleinste Abstand zwischen den beiden Sperrzungen 27 geringer als der Durchmesser des Kugelkopfes 15, so dass der Kugelkopf 15 durch die Geometrie der Sicherungsspange 25 verliersicher in der Kugelpfanne 19 gehalten ist.

Hier und vorzugsweise befindet sich die Montageposition entlang der geometrischen Mittellinie zwischen der Sicherungsposition und der Demontageposition.

Hier und vorzugsweise entspricht die Vormontageposition der Montageposition. Es ist jedoch auch möglich, dass die Montageposition näher zur Sicherungsposition angeordnet ist als die Vormontageposition oder umgekehrt.

Der Kugelkopf 15 kann im Rahmen der Demontage nur dann aus dem inneren Hohlraum 22 der Kugelpfanne 19 entgegen der Einführrichtung R entfernt werden, wenn die Sicherungsspange 25 sich in ihrer Demontageposition befindet, wie in Fig. 7c) und Fig. 7d) gezeigt ist.

In der in den Figuren gezeigten und insoweit bevorzugten Ausführungsform ist die Sicherungsspange 25 im montierten Zustand der Anschlussgelenkanordnung 10 verliersicher an der Kugelpfanneneinheit 18 gehalten. Folglich ist die Sicherungsspange 25 nicht nur in ihrer Sicherungsposition, ihrer Montageposition, ihrer Vormontageposition und ihrer Demontageposition an der Kugelpfanneneinheit 18 verliersicher gehalten, sondern sobald die Sicherungsspange 25 mit der Kugelpfanneneinheit 18 verbunden ist, also auch in allen zwischen der Sicherungsposition und der Demontageposition befindlichen Positionen.

Wesentlich ist nun, dass die Sicherungsspange 25 in der Demontageposition verliersicher an der Kugelpfanneneinheit 18 gehalten wird.

Auf alle Ausführungen zur vorschlagsgemäßen Anschlussgelenkanordnung 10 darf insoweit verwiesen werden.

## Patentansprüche

1. Anschlussgelenkanordnung zum Anschluss einer längenverstellbaren Antriebsanordnung (1) an ein Kraftfahrzeug (4), insbesondere an ein Verschlusselement (3) des Kraftfahrzeugs (4), wobei die Anschlussgelenkanordnung (10) einen Kugelbolzen (14) aufweist, wobei der Kugelbolzen (14) einen Kugelkopf (15) und einen Bolzenschaft (16) mit einem Anschlussabschnitt (17) zur Befestigung des Kugelbolzens (14) an dem Kraftfahrzeug (4) oder der Antriebsanordnung (1) aufweist, wobei die Anschlussgelenkanordnung (10) eine Kugelpfanneneinheit (18) aufweist, die im montierten Zustand mit dem Kugelbolzen (14) ein Kugelgelenk bildet, wobei die Kugelpfanneneinheit (18) eine Kugelpfanne (19) mit einer geometrischen Mittelachse (M) und einem radial innenseitigen Hohlraum (22) zur Aufnahme des in einer axialen Einführrichtung (R) eingeführten Kugelkopfes (15), mit einer Einführungsöffnung (23) zum Einführen des Kugelkopfes (15) in den innenseitigen Hohlraum (22) und mit mehreren von außen in den Hohlraum (22) führenden Durchführungen (24) aufweist, wobei die Kugelpfanneneinheit (18) einen Anschlussabschnitt (17) zur Befestigung der Kugelpfanneneinheit (18) an der Antriebsanordnung (1) oder dem Kraftfahrzeug (4) aufweist, wobei die Anschlussgelenkanordnung (10) eine Sicherungsspange (25) zur Arretierung des Kugelkopfes (15) in der Kugelpfanne (19) aufweist, wobei die Sicherungsspange (25) einen Bügelabschnitt (26) und damit verbundene Sperrzungen (27) aufweist, wobei sich im montierten Zustand die jeweilige Sperrzunge (27) vom Bügelabschnitt (26) durch eine jeweils zugeordnete der Durchführungen (24) in den Hohlraum (22) erstreckt, wobei die Sperrzungen (27) den Kugelkopf (15) im montierten Zustand an seiner dem Bolzenschaft (16) zugewandten Seite hintergreifen, wobei die Sicherungsspange (25) im Rahmen einer Demontage von einer Sicherungsposition, in der die Sicherungsspange (25) den Kugelkopf (15) in der Kugelpfanne (19) hält und in der die Sicherungsspange (25) an der Kugelpfanneneinheit (18) verliersicher gehalten ist, in eine Demontageposition, in der der Kugelbolzen (14) von der Kugelpfanneneinheit (18) lösbar ist, verschiebbar ist,
wobei die Sicherungsspange (25) in der Demontageposition verliersicher an der Kugelpfanneneinheit (18) gehalten ist, wobei wenigstens eine Sperrzunge (27) an ihrer dem Bügelabschnitt (26) abgewandten Seite einen von der Sperrzunge (27), im Wesentlichen senkrecht, abgewinkelten Sicherungsabschnitt (28) aufweist, wobei der Sicherungsabschnitt (28) der anderen Sperrzunge (27) zugewandt ist,
**dadurch gekennzeichnet,**
**dass** der Sicherungsabschnitt (28) im montierten Zustand der Sicherungsspange (25) mit einer im Wesentlichen nach außen gerichteten und dem Bügelabschnitt (26) abgewandten Anschlagsfläche (29) der Kugelpfanneneinheit (18) derart in Eingriff steht oder derart in Eingriff bringbar ist, dass die Sicherungsspange (25) verliersicher an der Kugelpfanneneinheit (18) gehalten ist.

2. Anschlussgelenkanordnung nach Anspruch 1, **dadurch gekennzeichnet, dass** die Sperrzungen (27) im montierten Zustand der Sicherungsspange (25) mit jeweils einem Führungsabschnitt (30) der Kugelpfanneneinheit (18) in Eingriff stehen und dass die Führungsabschnitte (30) quer zur geometrischen Mittelachse (M) abgeschrägt sind und so einen rampenförmigen Führungsabschnitt (30) derart ausbilden, dass sich der Abstand zwischen den beiden rampenförmigen Führungsabschnitten (30) entlang der geometrischen Mittelachse (M) in Richtung zur Einführungsöffnung (23) hin verringert.

3. Anschlussgelenkanordnung nach Anspruch 1 oder 2, **dadurch gekennzeichnet, dass** die Sicherungsspange (25) in ihrer Sicherungsposition einen geringeren Abstand zur Einführungsöffnung (23) aufweist als in ihrer Demontageposition.

4. Anschlussgelenkanordnung nach Anspruch 2 oder 3, **dadurch gekennzeichnet, dass** die Sicherungsspange (25) in ihrer Sicherungsposition gehalten ist und/oder dass die Sperrzungen (27) in der Sicherungsposition derart gegen die Führungsabschnitte (30) anliegen, dass die Sicherungsspange (25) in ihrer Sicherungsposition gehalten ist, vorzugsweise, dass die Sperrzungen (27) in der Sicherungsposition gegeneinander verspannt sind, oder, dass die Sperrzungen (27) in der Sicherungsposition nicht gegeneinander verspannt sind.

5. Anschlussgelenkanordnung nach einem der vorhergehenden Ansprüche, **dadurch gekennzeichnet, dass** die Sicherungsspange (25) durch eine in einer Demontagerichtung (D) auf den Bügelabschnitt (26) einwirkenden Demontagekraft in die Demontageposition bringbar ist, vorzugsweise, dass die Sperrzungen (27) in der Demontageposition derart gegeneinander verspannt sind, dass die Sicherungsspange (25) nach Wegfall der Demontagekraft automatisch in ihre Sicherungsposition überführt wird, oder, dass die Sicherungsspange (25) durch eine Bewegung entlang der geometrischen Mittelachse (M) und eine Bewegung quer zur geometrischen Mittelachse (M) in ihre Demontageposition bringbar ist.

6. Anschlussgelenkanordnung nach einem der vorhergehenden Ansprüche, **dadurch gekennzeichnet, dass** die Sperrzungen (27) in der Demontageposition derart weit voneinander beabstandet sind, dass der Kugelkopf (15) zwischen den beiden Sperrzungen (27) durchführbar ist.

7. Anschlussgelenkanordnung nach einem der vorhergehenden Ansprüche, **dadurch gekennzeichnet, dass** die Anschlagsfläche (29) quer zur geometrischen Mittelachse (M) abgeschrägt ist und so einen rampenförmigen Anschlagabschnitt (33) derart ausbildet, dass sich der Abstand zwischen dem rampenförmigen Anschlagabschnitt (33) und der geometrischen Mittelachse (M) in Richtung zur Einführungsöffnung (23) hin derart vergrößert, dass die Sicherungsspange (25) durch eine Bewegung entlang der geometrischen Mittelachse (M) und eine Bewegung quer zur geometrischen Mittelachse (M) in die Demontageposition bringbar ist.

8. Anschlussgelenkanordnung nach einem der vorhergehenden Ansprüche, **dadurch gekennzeichnet, dass** im montierten Zustand der Sicherungsspange (25) diese verliersicher an der Kugelpfanneneinheit (18) gehalten ist.

9. Verfahren zur Montage einer Anschlussgelenkanordnung nach einem der Ansprüche 1 bis 8, **dadurch gekennzeichnet, dass** die Sicherungsspange (25) im Rahmen einer Vormontage derart in die Kugelpfanneneinheit (18), insbesondere quer zur Einführrichtung (R), in eine Vormontageposition eingeschoben wird, dass die Sicherungsspange (25) verliersicher in der Kugelpfanneneinheit (18) gehalten ist.

10. Verfahren zur Montage einer Anschlussgelenkanordnung nach einem der Ansprüche 1 bis 8, insbesondere Verfahren nach Anspruch 9, **dadurch gekennzeichnet, dass** die Sicherungsspange (25) unter Verwendung eines in den inneren Hohlraum (22) der Kugelpfanne (19) eingeführten Vormontagewerkzeugs (34) in die Kugelpfanneneinheit (18) eingeschoben wird, vorzugsweise, dass die Entnahme des Vormontagewerkzeugs (34) aus dem inneren Hohlraum (22) eine Überführung der Sicherungsspange (25) von ihrer Montageposition in ihre Sicherungsposition bewirkt, weiter vorzugsweise, dass das Vormontagewerkzeug (34) zwei im Wesentlichen radial äußere Führungsflächen (35) aufweist, die beim Einstecken der Sicherungsspange (25) in die Kugelpfanneneinheit (18) jeweils derart mit einer zugeordneten Sperrzunge (27) und/oder einem zugeordneten Sicherungsabschnitt (28) in Eingriff bringbar sind, dass die Sperrzungen (27) beim Einstecken in die Kugelpfanneneinheit (18) voneinander wegbewegt werden.

11. Verfahren zur Montage einer Anschlussgelenkanordnung nach einem der Ansprüche 1 bis 8, insbesondere Verfahren nach Anspruch 9 oder 10, **dadurch gekennzeichnet, dass** die Sicherungsspange (25) im Rahmen einer Hauptmontage der Anschlussgelenkanordnung (10) durch eine Bewegung des Kugelkopfs (15) in Einführrichtung (R) in den inneren Hohlraum (22) zunächst in eine Montageposition überführt wird, dass eine weitere Bewegung des Kugelkopfes (15) in Einführrichtung (R) das Einführen des Kugelkopfs (15) in den Hohlraum (22) der Kugelpfanne (19) bewirkt und dass die Sicherungsspange (25) im Anschluss an die Kugelbolzenmontage (14) automatisch in ihre Sicherungsposition überführt wird.

12. Antriebsanordnung zur Verstellung eines Verschlusselements (3) eines Kraftfahrzeugs (4) mit einer, insbesondere motorischen Antriebseinheit (5) und mit einem dieser nachgeschalteten Vorschubgetriebe (8) zur Längenverstellung der Antriebsanordnung (1) und mit wenigstens einer Anschlussgelenkanordnung (10) nach einem der Ansprüche 1 bis 8, über die die Antriebsanordnung (1) an dem Verschlusselement (3) oder an dem Kraftfahrzeug (4) im Übrigen befestigbar ist.

13. Verschlusselementanordnung mit einem Verschlusselement (3), dem eine Antriebsanordnung (1) nach Anspruch 12 und/oder eine Anschlussgelenkanordnung (10) nach einem der Ansprüche 1 bis 8 zugeordnet ist.

14. Verfahren zur Demontage einer Anschlussgelenkanordnung (10) zum Anschluss einer längenverstellbaren Antriebsanordnung (1) an ein Kraftfahrzeug (4), insbesondere an ein Verschlusselement (3) des Kraftfahrzeugs (4), wobei die Anschlussgelenkanordnung (10) einen Kugelbolzen (14) aufweist, wobei der Kugelbolzen (14) einen Kugelkopf (15) und einen Bolzenschaft (16) mit einem Anschlussabschnitt (17) zur Befestigung des Kugelbolzens (14) an dem Kraftfahrzeug (4) oder der Antriebsanordnung (1) aufweist, wobei die Anschlussgelenkanordnung (10) eine Kugelpfanneneinheit (18) aufweist, die im montierten Zustand mit dem Kugelbolzen (14) ein Kugelgelenk bildet, wobei die Kugelpfanneneinheit (18) eine Kugelpfanne (19) mit einem radial innenseitigen Hohlraum (22) zur Aufnahme des in einer axialen Einführrichtung (R) eingeführten Kugelkopfes (15), mit einer Einführungsöffnung (23) zum Einführen des Kugelkopfes (15) in den innenseitigen Hohlraum (22) und mit mehreren von außen in den Hohlraum (22) führenden Durchführungen (24) aufweist, wobei die Kugelpfanneneinheit (18) einen Anschlussabschnitt (17) zur Befestigung der Kugelpfanneneinheit (18) an der Antriebsanordnung (1) oder dem Kraftfahrzeug (4) aufweist, wobei die Anschlussgelenkanordnung (10) eine Sicherungsspange (25) zur Arretierung des Kugelkopfes (15) in der Kugelpfanne (19) aufweist, wobei die Sicherungsspange (25) einen Bügelabschnitt (26) und damit verbundene Sperrzungen (27) aufweist, wobei sich im montierten Zustand die jeweilige Sperrzunge (27) vom Bügelabschnitt (26) durch eine jeweils zugeordnete der Durchführungen (24) in den Hohlraum (22) erstreckt, wobei die Sperrzungen (27) den Kugelkopf (15) im montierten Zustand an seiner dem Bolzenschaft (16) zugewandten Seite hintergreifen, wobei die Sicherungsspange (25) im montierten Zustand von einer Sicherungsposition, in der der Kugelkopf (15) von der Sicherungsspange (25) in der Kugelpfanne (19) gehalten wird und die Sicherungsspange (25) an der Kugelpfanneneinheit (18) verliersicher gehalten wird, in eine Demontageposition, in der der Kugelbolzen (14) von der Kugelpfanneneinheit (18) lösbar ist, verschoben wird,
wobei die Sicherungsspange (25) in der Demontageposition verliersicher an der Kugelpfanneneinheit (18) gehalten wird,
wobei wenigstens eine Sperrzunge (27) an ihrer dem Bügelabschnitt (26) abgewandten Seite einen von der Sperrzunge (27), im Wesentlichen senkrecht, abgewinkelten Sicherungsabschnitt (28) aufweist, wobei der Sicherungsabschnitt (28) der anderen Sperrzunge (27) zugewandt ist,
**dadurch gekennzeichnet,**
**dass** der Sicherungsabschnitt (28) im montierten Zustand der Sicherungsspange (25) mit einer im Wesentlichen nach außen gerichteten und dem Bügelabschnitt (26) abgewandten Anschlagsfläche (29) der Kugelpfanneneinheit (18) derart in Eingriff steht oder derart in Eingriff bringbar ist, dass die Sicherungsspange (25) verliersicher an der Kugelpfanneneinheit (18) gehalten ist.

## Claims

1. Connecting joint assembly for connecting a length-adjustable drive assembly (1) to a motor vehicle (4), in particular to a closure element (3) of the motor vehicle (4), wherein the connecting joint assembly (10) has a ball pin (14), wherein the ball pin (14) has a ball head (15) and a pin shaft (16) with a connecting section (17) for fastening the ball pin (14) to the motor vehicle (4) or to the drive assembly (1), wherein the connecting joint assembly (10) has a ball socket unit (18), which forms a ball joint with the ball pin (14) in the mounted state, wherein the ball socket unit (18) has a ball socket (19) with a geometric central axis (M) and a radially inner cavity (22) for receiving the ball head (15), which is inserted in an axial insertion direction (R), with an insertion opening (23) for inserting the ball head (15) into the inner cavity (22) and with a plurality of feedthroughs (24) leading from the outside into the cavity (22), wherein the ball socket unit (18) has a connecting section (17) for fastening the ball socket unit (18) to the drive assembly (1) or to the motor vehicle (4), wherein the connecting joint assembly (10) has a securing clip (25) for locking the ball head (15) in the ball socket (19), wherein the securing clip (25) has a bracket section (26) and locking tongues (27) connected thereto, wherein, in the mounted state, the respective locking tongue (27) extends from the bracket section (26) through a respectively assigned one of the feedthroughs (24) into the cavity (22), wherein the locking tongues (27) engage behind the ball head (15) in the mounted state on its side facing the pin shaft (16), wherein the securing clip (25) is displaceable, within the scope of a removal, from a securing position, in which the securing clip (25) holds the ball head (15) in the ball socket (19) and in which the securing clip (25) is held captively on the ball socket unit (18), into a removal position, in which the ball pin (14) is releasable from the ball socket unit (18),
wherein the securing clip (25) is held captively in the removal position on the ball socket unit (18), wherein at least one locking tongue (27) on its side facing away from the bracket section (26) has a securing section (28) which is angled, substantially perpendicularly, from the locking tongue (27), wherein the securing section (28) faces the other locking tongue (27),
**characterized**
**in that**, in the mounted state of the securing clip (25), the securing section (28) is in engagement with a substantially outwardly directed stop surface (29) of the ball socket unit (18), the stop surface facing away from the bracket section (26), in such a way or can be brought into engagement in such a way, that the securing clip (25) is held captively on the ball socket unit (18).

2. Connecting joint assembly according to Claim 1, **characterized in that**, in the mounted state of the securing clip (25), the locking tongues (27) are in engagement with a respective guide section (30) of the ball socket unit (18), and **in that** the guide sections (30) are bevelled transversely with respect to the geometric central axis (M) and thus form a ramp-shaped guide section (30) in such a way that the distance between the two ramp-shaped guide sections (30) along the geometric central axis (M) decreases in the direction of the insertion opening (23).

3. Connecting joint assembly according to Claim 1 or 2, **characterized in that** the securing clip (25) in its securing position is at a smaller distance from the insertion opening (23) than in its removal position.

4. Connecting joint assembly according to Claim 2 or 3, **characterized in that** the securing clip (25) is held in its securing position, and/or **in that**, in the securing position, the locking tongues (27) lie against the guide sections (30) in such a way that the securing clip (25) is held in its securing position, preferably **in that** the locking tongues (27) are braced against each other in the securing position, or **in that** the locking tongues (27) are not braced against each other in the securing position.

5. Connecting joint assembly according to any one of the preceding claims, **characterized in that** the securing clip (25) can be brought into the removal position by a removal force acting on the bracket section (26) in a removal direction (D), preferably **in that**, in the removal position, the locking tongues (27) are braced against each other in such a way that the securing clip (25) is automatically transferred into its securing position after the removal force ceases, or **in that** the securing clip (25) can be brought into its removal position by a movement along the geometric central axis (M) and a movement transversely with respect to the geometric central axis (M).

6. Connecting joint assembly according to any one of the preceding claims, **characterized in that**, in the removal position, the locking tongues (27) are spaced apart from each other in such a way that the ball head (15) can be guided between the two locking tongues (27).

7. Connecting joint assembly according to any one of the preceding claims, **characterized in that** the stop surface (29) is bevelled transversely with respect to the geometric central axis (M) and thus forms a ramp-shaped stop section (33) in such a way that the distance between the ramp-shaped stop section (33) and the geometric central axis (M) increases in the direction of the insertion opening (23) in such a way that the securing clip (25) can be brought into the removal position by a movement along the geometric central axis (M) and a movement transversely with respect to the geometric central axis (M).

8. Connecting joint assembly according to any one of the preceding claims, **characterized in that**, in the mounted state of the securing clip (25), the latter is held captively on the ball socket unit (18).

9. Method for mounting a connecting joint assembly according to any one of Claims 1 to 8, **characterized in that**, within the scope of pre-assembly, the securing clip (25) is pushed into a pre-assembly position in the ball socket unit (18), in particular transversely with respect to the insertion direction (R), in such a way that the securing clip (25) is held captively in the ball socket unit (18).

10. Method for mounting a connecting joint assembly according to any one of Claims 1 to 8, in particular the method according to Claim 9, **characterized in that**, using a pre-assembly tool (34) introduced into the inner cavity (22) of the ball socket (19), the securing clip (25) is pushed into the ball socket unit (18), preferably **in that** the removal of the pre-assembly tool (34) from the inner cavity (22) causes the securing clip (25) to be transferred from its assembly position into its securing position, more preferably **in that** the pre-assembly tool (34) has two substantially radially outer guide surfaces (35) which can be brought into engagement in each case with an associated locking tongue (27) and/or an associated securing section (28), when the securing clip (25) is inserted into the ball socket unit (18), in such a way that the locking tongues (27) are moved away from each other on insertion into the ball socket unit (18).

11. Method for mounting a connecting joint assembly according to any one of Claims 1 to 8, in particular the method according to Claim 9 or 10, **characterized in that**, within the scope of a main assembly of the connecting joint assembly (10), the securing clip (25) is firstly transferred into an assembly position by a movement of the ball head (15) in the insertion direction (R) into the inner cavity (22), **in that** a further movement of the ball head (15) in the insertion direction (R) causes the ball head (15) to be inserted into the cavity (22) of the ball socket (19), and **in that** the securing clip (25) is automatically transferred into its securing position following the ball pin assembly (14).

12. Drive assembly for adjusting a closure element (3) of a motor vehicle (4) with an, in particular motorized drive unit (5) and with a feed mechanism (8) connected downstream of the latter for adjusting the length of the drive assembly (1), and with at least one connecting joint assembly (10) according to any one of Claims 1 to 8, by means of which the drive assembly (1) is furthermore fastenable to the closure element (3) or to the motor vehicle (4).

13. Closure element assembly with a closure element (3), which is assigned a drive assembly (1) according to Claim 12 and/or a connecting joint assembly (10) according to any one of Claims 1 to 8.

14. Method for removal of a connecting joint assembly (10) for connecting a length-adjustable drive assembly (1) to a motor vehicle (4), in particular to a closure element (3) of the motor vehicle (4), wherein the connecting joint assembly (10) has a ball pin (14), wherein the ball pin (14) has a ball head (15) and a pin shaft (16) with a connecting section (17) for fastening the ball pin (14) to the motor vehicle (4) or to the drive assembly (1), wherein the connecting joint assembly (10) has a ball socket unit (18), which forms a ball joint with the ball pin (14) in the mounted state, wherein the ball socket unit (18) has a ball socket (19) with a radially inner cavity (22) for receiving the ball head (15), which is inserted in an axial insertion direction (R), with an insertion opening (23) for inserting the ball head (15) into the inner cavity (22) and with a plurality of feedthroughs (24) leading from the outside into the cavity (22), wherein the ball socket unit (18) has a connecting section (17) for fastening the ball socket unit (18) to the drive assembly (1) or to the motor vehicle (4), wherein the connecting joint assembly (10) has a securing clip (25) for locking the ball head (15) in the ball socket (19), wherein the securing clip (25) has a bracket section (26) and locking tongues (27) connected thereto, wherein, in the mounted state, the respective locking tongue (27) extends from the bracket section (26) through a respectively assigned one of the feedthroughs (24) into the cavity (22), wherein the locking tongues (27) engage behind the ball head (15) in the mounted state on its side facing the pin shaft (16), wherein, in the mounted state, the securing clip (25) is displaced from a securing position, in which the ball head (15) is held in the ball socket (19) by the securing clip (25) and the securing clip (25) is held captively on the ball socket unit (18), into a removal position, in which the ball pin (14) is releasable from the ball socket unit (18),
wherein the securing clip (25) is held captively in the removal position on the ball socket unit (18),
wherein at least one locking tongue (27) on its side facing away from the bracket section (26) has a securing section (28) which is angled, substantially perpendicularly, from the locking tongue (27), wherein the securing section (28) faces the other locking tongue (27),
**characterized**
**in that**, in the mounted state of the securing clip (25), the securing section (28) is in engagement with a substantially outwardly directed stop surface (29) of the ball socket unit (18), the stop surface facing away from the bracket section (26), in such a way or can be brought into engagement in such a way, that the securing clip (25) is held captively on the ball socket unit (18).

## Revendications

1. Agencement d'articulation de raccordement pour raccorder un agencement d'entraînement réglable en longueur (1) à un véhicule automobile (4), notamment à un élément de fermeture (3) du véhicule automobile (4), l'agencement d'articulation de raccordement (10) présentant un goujon à rotule (14), le goujon à rotule (14) présentant une tête sphérique (15) et une tige de goujon (16) avec une section de raccordement (17) pour la fixation du goujon à rotule (14) sur le véhicule automobile (4) ou l'agencement d'entraînement (1), l'agencement d'articulation de raccordement (10) présentant une unité de cuvette sphérique (18) qui, à l'état monté, forme une articulation à rotule avec le boulon à rotule (14), l'unité de cuvette sphérique (18) présentant une cuvette sphérique (19) avec un axe géométrique central (M) et une cavité radiale intérieure (22) pour recevoir la tête sphérique (15) introduite dans une direction d'introduction axiale (R), avec une ouverture d'introduction (23) pour introduire la tête sphérique (15) dans la cavité intérieure (22) et avec plusieurs passages (24) menant de l'extérieur à la cavité (22), l'unité de cuvette sphérique (18) présentant une section de raccordement (17) pour la fixation de l'unité de cuvette sphérique (18) à l'agencement d'entraînement (1) ou au véhicule automobile (4), l'agencement d'articulation de raccordement (10) présentant une agrafe de retenue (25) pour bloquer la tête sphérique (15) dans la cuvette sphérique (19), l'agrafe de sécurité (25) présentant une section en étrier (26) et des languettes d'arrêt (27) qui y sont reliées, la languette d'arrêt (27) respective s'étendant à l'état monté depuis la section en étrier (26) à travers l'un des passages (24) respectivement associés dans la cavité (22), les languettes d'arrêt (27) s'engageant derrière la tête sphérique (15) à l'état monté, sur son côté tourné vers la tige du goujon (16), l'agrafe de retenue (25) pouvant être déplacée dans le cadre d'un démontage à partir d'une position de retenue, dans laquelle l'agrafe de retenue (25) maintient la tête sphérique (15) dans la cuvette sphérique (19) et dans laquelle l'agrafe de retenue (25) est maintenue de manière imperdable sur l'unité de cuvette sphérique (18), dans une position de démontage dans laquelle le goujon à rotule (14) peut être détaché de l'unité de cuvette sphérique (18),
l'agrafe de retenue (25) étant maintenue de manière imperdable sur l'unité de cuvette sphérique (18) dans la position de démontage, au moins une languette d'arrêt (27) présentant, sur son côté détourné de la section en étrier (26), une section de retenue (28) coudée de manière essentiellement perpendiculaire à la languette d'arrêt (27), la section de retenue (28) étant tournée vers l'autre languette d'arrêt (27),
**caractérisé**
**en ce que** la section de retenue (28), à l'état monté de l'agrafe de retenue (25), est en prise ou peut être mise en prise avec une surface de butée (29) de l'unité de cuvette sphérique (18) qui est essentiellement orientée vers l'extérieur et détournée de la section en étrier (26), de telle sorte que l'agrafe de retenue (25) soit maintenue de manière imperdable sur l'unité de cuvette sphérique (18).

2. Agencement d'articulation de raccordement selon la revendication 1, **caractérisé en ce que** les languettes d'arrêt (27), à l'état monté de l'agrafe de retenue (25) est montée, sont en prise avec respectivement une section de guidage (30) de l'unité de cuvette sphérique (18) et **en ce que** les sections de guidage (30) sont inclinées transversalement par rapport à l'axe géométrique central (M) et réalisent ainsi une section de guidage en forme de rampe (30) de telle sorte que la distance entre les deux sections de guidage en forme de rampe (30) le long de l'axe géométrique central (M) diminue en direction de l'ouverture d'introduction (23).

3. Agencement d'articulation de raccordement selon la revendication 1 ou 2, **caractérisé en ce que** l'agrafe de retenue (25) présente, dans sa position de retenue, une distance plus faible par rapport à l'ouverture d'introduction (23) que dans sa position de démontage.

4. Agencement d'articulation de raccordement selon la revendication 2 ou 3, **caractérisé en ce que** l'agrafe de retenue (25) est maintenue dans sa position de retenue et/ou **en ce que** les languettes d'arrêt (27) s'appuient contre les sections de guidage (30) dans la position de retenue de telle sorte que l'agrafe de retenue (25) est maintenue dans sa position de retenue, de préférence **en ce que** les languettes d'arrêt (27) sont serrées l'une contre l'autre dans la position de retenue, ou **en ce que** les languettes d'arrêt (27) ne sont pas serrées l'une contre l'autre dans la position de retenue.

5. Agencement d'articulation de raccordement selon l'une quelconque des revendications précédentes, **caractérisé en ce que** l'agrafe de retenue (25) peut être amenée dans la position de démontage par une force de démontage agissant dans une direction de démontage (D) sur la section en étrier (26), de préférence **en ce que** les languettes d'arrêt (27) sont serrées l'une contre l'autre dans la position de démontage de telle sorte que l'agrafe de retenue (25) est automatiquement transférée dans sa position de retenue après disparition de la force de démontage, ou que l'agrafe de retenue (25) peut être amenée dans sa position de démontage par un mouvement le long de l'axe géométrique central (M) et un mouvement transversalement à l'axe géométrique central (M).

6. Agencement d'articulation de raccordement selon l'une quelconque des revendications précédentes, **caractérisé en ce que** les languettes d'arrêt (27) sont espacées l'une de l'autre dans la position de démontage dans une mesure telle que la tête sphérique (15) puisse passer entre les deux languettes d'arrêt (27).

7. Agencement d'articulation de raccordement selon l'une quelconque des revendications précédentes, **caractérisé en ce que** la surface de butée (29) est biseautée transversalement par rapport à l'axe géométrique central (M) et réalise ainsi une section de butée en forme de rampe (33) de telle sorte que la distance entre la section de butée en forme de rampe (33) et l'axe géométrique central (M) augmente en direction de l'ouverture d'introduction (23) de telle sorte que l'agrafe de retenue (25) peut être amenée en position de démontage par un mouvement le long de l'axe géométrique central (M) et un mouvement transversalement à l'axe géométrique central (M).

8. Agencement d'articulation de raccordement selon l'une quelconque des revendications précédentes, **caractérisé en ce qu'**à l'état monté de l'agrafe de retenue (25), celle-ci est maintenue de manière imperdable sur l'unité de cuvette sphérique (18).

9. Procédé de montage d'un agencement d'articulation de raccordement selon l'une quelconque des revendications 1 à 8, **caractérisé en ce que**, dans le cadre d'un pré-montage, l'agrafe de retenue (25) est insérée dans l'unité de cuvette rotative (18), notamment transversalement à la direction d'introduction (R), dans une position de pré-montage de telle sorte que l'agrafe de retenue (25) soit maintenue de manière imperdable dans l'unité de cuvette sphérique (18).

10. Procédé de montage d'un agencement d'articulation de raccordement selon l'une quelconque des revendications 1 à 8, notamment procédé selon la revendication 9, **caractérisé en ce que** l'agrafe de retenue (25) est insérée dans l'unité de cuvette sphérique (18) en utilisant un outil de pré-montage (34) introduit dans la cavité intérieure (22) de la cuvette sphérique (19), de préférence **en ce que** le retrait de l'outil de pré-montage (34) de la cavité intérieure (22) provoque un transfert de l'agrafe de retenue (25) de sa position de montage à sa position de retenue, de préférence en outre **en ce que** l'outil de pré-montage (34) présente deux surfaces de guidage (35) essentiellement radiales extérieures qui, lors de l'insertion de l'agrafe de retenue (25) dans l'unité de cuvette sphérique (18), peuvent respectivement être mises en prise avec une languette d'arrêt associée (27) et/ou une section de retenue associée (28) de telle sorte que les languettes d'arrêt (27) s'écartent l'une de l'autre lors de l'insertion dans l'unité de cuvette sphérique (18).

11. Procédé de montage d'un agencement d'articulation de raccordement selon l'une quelconque des revendications 1 à 8, notamment procédé selon la revendication 9 ou 10, **caractérisé en ce que**, dans le cadre d'un montage principal de l'agencement d'articulation de raccordement (10), l'agrafe de retenue (25) est d'abord amenée dans une position de montage par un mouvement de la tête sphérique (15) dans la direction d'introduction (R) dans la cavité intérieure (22), **en ce qu'**un mouvement supplémentaire de la tête sphérique (15) dans la direction d'introduction (R) provoque l'introduction de la tête sphérique (15) dans la cavité (22) de la cuvette sphérique (19) et **en ce que** l'agrafe de retenue (25) est automatiquement transférée dans sa position de retenue à la suite du montage du goujon à rotule (14).

12. Agencement d'entraînement pour le réglage d'un élément de fermeture (3) d'un véhicule automobile (4) avec une unité d'entraînement, notamment motorisée (5) et avec un mécanisme d'avance (8) monté en aval de celle-ci pour le réglage en longueur de l'agencement d'entraînement (1) et avec au moins un agencement d'articulation de raccordement (10) selon l'une quelconque des revendications 1 à 8, par l'intermédiaire duquel l'agencement d'entraînement (1) peut être fixé à l'élément de fermeture (3) ou au véhicule automobile (4) pour le reste.

13. Agencement d'élément de fermeture avec un élément de fermeture (3) auquel est associé un agencement d'entraînement (1) selon la revendication 12 et/ou un agencement d'articulation de raccordement (10) selon l'une quelconque des revendications 1 à 8.

14. Procédé de démontage d'un agencement d'articulation de raccordement (10) destiné à raccorder un agencement d'entraînement réglable en longueur (1) à un véhicule automobile (4), notamment à un élément de fermeture (3) du véhicule automobile (4), l'agencement d'articulation de raccordement (10) présentant un goujon à rotule (14), le goujon à rotule (14) présentant une tête sphérique (15) et une tige de goujon (16) avec une section de raccordement (17) pour la fixation du goujon à rotule (14) sur le véhicule automobile (4) ou l'agencement d'entraînement (1), l'agencement d'articulation de raccordement (10) présentant une unité de cuvette sphérique (18) qui, à l'état monté, forme une articulation à rotule avec le goujon à rotule (14), l'unité de cuvette sphérique (18) présentant une cuvette sphérique (19) avec une cavité radiale intérieure (22) pour recevoir la tête sphérique (15) introduite dans une direction d'introduction axiale (R), avec une ouverture d'introduction (23) pour introduire la tête sphérique (15) dans la cavité intérieure (22) et avec plusieurs passages (24) menant de l'extérieur à la cavité (22), l'unité de cuvette sphérique (18) présentant une section de raccordement (17) pour la fixation de l'unité de cuvette sphérique (18) à l'agencement d'entraînement (1) ou au véhicule automobile (4), l'agencement d'articulation de raccordement (10) présentant une agrafe de retenue (25) pour bloquer la tête sphérique (15) dans la cuvette sphérique (19), l'agrafe de retenue (25) présentant une section en étrier (26) et des languettes d'arrêt (27) qui y sont reliées, la languette d'arrêt (27) respective s'étendant à l'état monté depuis la section en étrier (26) à travers l'un des passages (24) respectivement associés dans la cavité (22), les languettes d'arrêt (27) s'engageant derrière la tête sphérique (15) à l'état monté, sur son côté tourné vers la tige du goujon (16), l'agrafe de retenue (25) étant déplacée à l'état monté à partir d'une position de retenue, dans laquelle la tête sphérique (15) est maintenue par l'agrafe de retenue (25) dans la cuvette sphérique (19) et l'agrafe de retenue (25) est maintenue de manière imperdable sur l'unité de cuvette sphérique (18), dans une position de démontage dans laquelle le goujon à rotule (14) peut être détaché de l'unité de cuvette sphérique (18),
l'agrafe de retenue (25) étant maintenue de manière imperdable sur l'unité de cuvette sphérique (18) dans la position de démontage,
au moins une languette d'arrêt (27) présentant, sur son côté détourné de la section en étrier (26), une section de retenue (28) coudée de manière essentiellement perpendiculaire à la languette d'arrêt (27), la section de retenue (28) étant tournée vers l'autre languette d'arrêt (27),
**caractérisé**
**en ce que** la section de retenue (28), à l'état monté de l'agrafe de retenue (25), est en prise ou peut être mise en prise avec une surface de butée (29) de l'unité de cuvette sphérique (18) qui est essentiellement orientée vers l'extérieur et détournée de la section en étrier (26), de telle sorte que l'agrafe de retenue (25) soit maintenue de manière imperdable sur l'unité de cuvette sphérique (18).
